# EUROPÄISCHE PATENTANMELDUNG

(11) **EP 2 108 745 A2**
(43) Veröffentlichungstag der Anmeldung: **14.10.2009**
(21) Anmeldenummer: 09005240.8
(22) Anmeldetag: 09.04.2009
(51) Int. Cl.: E02F 5/10

(54) **Verfahren und Vorrichtung zum Verlegen einer Rohrleitung im Boden**

(30) Priorität: 12.04.2008 DE 102008018574
(71) Anmelder: Mr. Rüdiger Kögler, 26670 Nordgeorgsfehn (DE)
(72) Erfinder: Mr. Rüdiger Kögler, 26670 Nordgeorgsfehn (DE)
(74) Vertreter: UEXKÜLL & STOLBERG

(57) **Zusammenfassung**

Bei einem Verfahren zum Verlegen einer Rohrleitung im Boden wird ein zu einer Zugvorrichtung (1) führendes Zugmittel (2) von einem Startpunkt entlang einer vorgegebenen Verlegelinie mittels Pflugverfahren zu einem Zielpunkt in den Boden (6) eingebracht. Das Zugmittel (2) wird am Zielpunkt mit einem keilförmigen Ziehkopf (7) verbunden, an dessen hinterer Seite die einzuziehende Rohrleitung (8) angebracht wird. Der keilförmige Ziehkopf (7) wird sodann von der Zugvorrichtung (1) über das Zugmittel (2) vom Zielpunkt entlang der vorgegebenen Verlegelinie in den Boden (6) eingezogen, wobei der anstehende Boden (6) von dem keilförmigen Ziehkopf (7) im Wesentlichen nach oben verdrängt wird. Die Tiefen- und Seitenlage des keilförmigen Ziehkopfes (7) wird während des Verlegevorgangs über eine im Wesentlichen vertikale Verbindungsvorrichtung (9) von einem Fahrzeug (10) an der Geländeoberfläche kontrolliert und gesteuert. Während des Verlegevorgangs tritt eine über die Verbindungsvorrichtung (9) zugeleitete Flüssigkeit aus an dem keilförmigen Ziehkopf (7) angebrachten Düsen aus.

## Beschreibung

Die vorliegende Erfindung betrifft ein Verfahren sowie dabei einsetzbare Vorrichtungen zur Verlegung einer Rohrleitung im Boden.

Rohrleitungen können auf unterschiedliche Weise im Boden verlegt werden, z.B. mittels so genannter konventioneller (oder offener) Verlegung, bei der ein Rohrgraben ausgehoben und die Rohrleitung anschließend in diesen abgesenkt wird, oder mittels grabenloser (oder geschlossener) Bauweisen, bei denen die Rohrleitung in ein vorher erstelltes Bohrloch eingebracht wird. Während die Verlegung im offenen Rohrgraben in der Regel relativ kostengünstig, aber wenig umweltfreundlich ist, kann eine grabenlose Verlegung als eine umweltfreundliche, jedoch relativ teuere Verlegemethode beschrieben werden.

Eine technische Zwischenlösung zwischen diesen beiden Varianten (offene und geschlossene Bauweise) stellt die mitunter als halboffene Bauweise bezeichnete Pflugtechnik dar, bei der die Rohrleitung in den Boden eingepflügt wird und dabei der anstehende Boden verdrängt wird. Eine solche Pflugtechnik ist zum Beispiel in der deutschen Patentschrift DE 196 23 922 C1 beschrieben. Diese halboffenen Bauweisen sind im Allgemeinen als eine kostengünstige und relativ umweltfreundliche Bauweise zu charakterisieren, eignen sich aber im Wesentlichen nur für leicht verdrängbare Böden und für kleine Rohrleitungsdurchmesser (ca. 100 mm bis 400 mm).

Der vorliegenden Erfindung liegt die Aufgabe zugrunde, auch für größere Durchmesserbereiche (von ca. 100 mm bis ca. 1.000 mm) eine Verlegung in halboffener Bauweise über größere Strekkenlängen (bis ca. 2.000 m) zu ermöglichen.

Diese Aufgabe wird gelöst durch ein Verfahren mit den Merkmalen des Anspruchs 1. Der Anspruch 4 betrifft einen bei dem Verfahren verwendeten keilförmigen Ziehkopf, der Anspruch 6 eine bei dem Verfahren verwendete Verbindungsvorrichtung. Vorteilhafte Ausgestaltungen der Erfindung ergeben sich aus den Unteransprüchen.

Bei dem erfindungsgemäßen Verfahren wird über eine Pflugvorrichtung ein Zugmittel von einem Startpunkt entlang einer vorgegebenen Verlegelinie zu einem Zielpunkt in den Boden eingebracht. Das Zugmittel wird am Zielpunkt mit der Vorderseite eines keilförmigen Ziehkopfes verbunden, und an der hinteren Seite des keilförmigen Ziehkopfes wird die einzuziehende Rohrleitung angebracht. Der keilförmige Ziehkopf wird sodann von dem Zugmittel über eine Zugvorrichtung vom Zielpunkt entlang der vorgegebenen Verlegelinie in den Boden eingezogen, wobei der anstehende Boden vom keilförmigen Ziehkopf im Wesentlichen nach oben verdrängt wird und die Tiefen- und Seitenlage des keilförmigen Ziehkopfes während des Verlegevorgangs über eine im Wesentlichen vertikale Verbindungsvorrichtung von einem Fahrzeug an der Geländeoberfläche kontrolliert und gesteuert wird. Die Verdrängung des anstehenden Bodens nach oben wird dabei erheblich durch die gezielte Schwächung des Bodens durch den verfahrensgemäß vor der Verlegung der Rohrleitung erstellten Schlitz während des Einpflügens des Zugmittels erleichtert. Dadurch werden zum einen die erforderlichen Zugkräfte verringert und zum anderen die Verlegeleistungen (Verlegegeschwindigkeiten) erhöht.

Die wesentlichen Vorteile gegenüber der bisherigen Arbeitsweise sind:
- Umweltfreundlichere Verlegung als mittels offener Bauweise.
- Wirtschaftlichere Verlegung als mittels grabenloser Bauweise.
- Verlegung größerer Rohrleitungsdurchmesser, als es mit der bisherigen halboffenen Verlegung möglich ist.

Das erfindungsgemäße Verfahren sowie dabei einsetzbare Vorrichtungen werden anhand von Zeichnungen dargestellt und nachfolgend erläutert, wobei die dort gezeigten Merkmale beispielhaften Charakter aufweisen. Die Zeichnungen zeigen in
- Fig. 1:: Prinzipielle Darstellung des erfindungsgemäßen Ver- fahrens.
- Fig. 2:: Prinzipielle Ausführungsform der erfindungsgemäßen Vorrichtung.

### Bezugszeichenliste

- 1: Zugvorrichtung
- 2: Zugmittel
- 3: Startpunkt
- 4: Verlegelinie
- 5: Zielpunkt
- 6: Boden
- 7: Keilförmiger Ziehkopf
- 8: Rohrleitung
- 9: Verbindungsvorrichtung
- 10: Fahrzeug
- 11: Düsen
- 12: Flüssigkeit
- 13: Zugfestes Gelenk
- 14: Steuerflächen
- 15: Walze
- 16: (nicht vergeben)
- 17: bereits verlegte Rohrleitung
- 18: Pfluggerät

### Ausführungsbeispiele

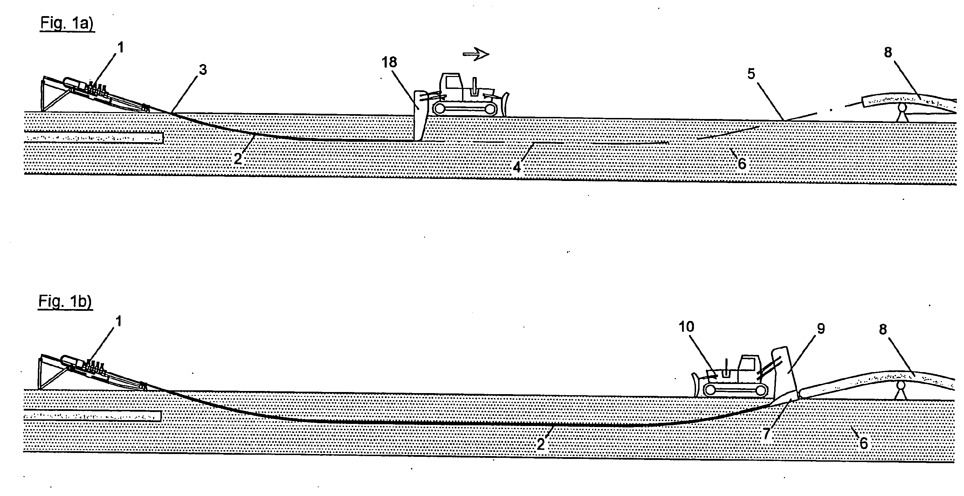

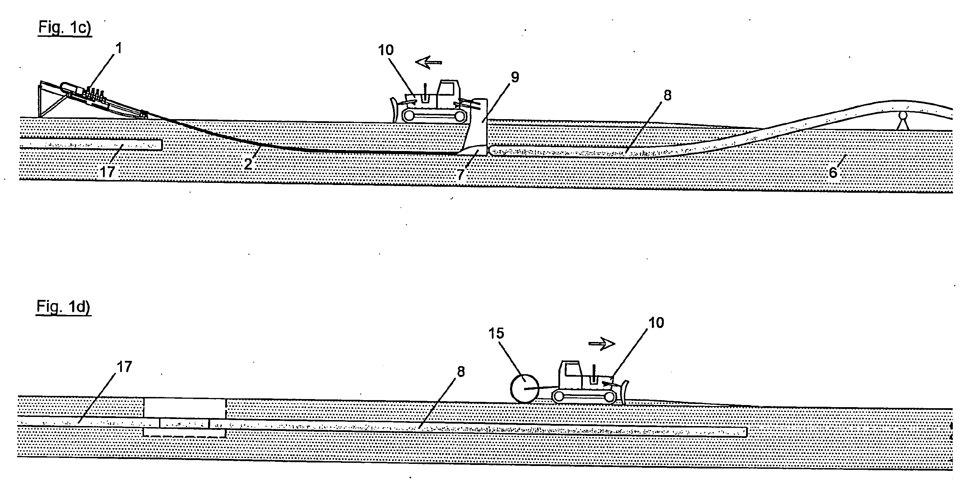

In Fig. 1 ist die prinzipielle Einsatzmöglichkeit des erfindungsgemäßen Verfahrens sowie dabei einsetzbarer Vorrichtungen gezeigt.

Fig. 1a: Von einem Zuggerät 1 (z.B. einer Horizontalbohranlage) wird ein Zugmittel 2 (z.B. Bohrgestänge) von einem Startpunkt 3 entlang einer vorgegebenen Verlegelinie 4 zu einem Zielpunkt 5 in den Boden 6 eingebracht. Im Beispiel geschieht dies mittels eines Pfluggeräts 18.

Fig. 1b: Dann wird das Zugmittel 2 am Zielpunkt 5 mit einem keilförmigen Ziehkopf 7 verbunden. An der hinteren Seite des keilförmigen Ziehkopfes 7 wird die einzuziehende Rohrleitung 8 angebracht.

Fig. 1c: Anschließend wird der keilförmige Ziehkopf 7 von dem Zuggerät 1 über das Zugmittel 2 vom Zielpunkt 5 entlang der vorgegebenen Verlegelinie 4 in den Boden 6 eingezogen, wobei der anstehende Boden 6 vom keilförmigen Ziehkopf 7 im Wesentlichen nach oben verdrängt wird und die Tiefen- und Seitenlage des keilförmigen Ziehkopfes 7 während des Verlegevorgangs über eine im Wesentlichen vertikale Verbindungsvorrichtung 9 von einem Fahrzeug 10 an der Geländeoberfläche kontrolliert und gesteuert wird.

Fig. 1d: Die eingezogene Rohrleitung 8 wird auf der einen Seite mit der bereits verlegten Rohrleitung 17 verbunden. In einem bevorzugten Anwendungsfall wird der vom keilförmigen Ziehkopf 7 nach oben verdrängte Boden von einer Walze 15 wieder eingeebnet und so verdichtet, dass der von der Rohrleitung 8 benötigte Raum im Boden 6 größtenteils kompensiert wird. Hierdurch wird die Rohrleitung fest ins Erdreich eingebettet. Der dann noch überschüssige Boden wird abtransportiert oder verteilt.

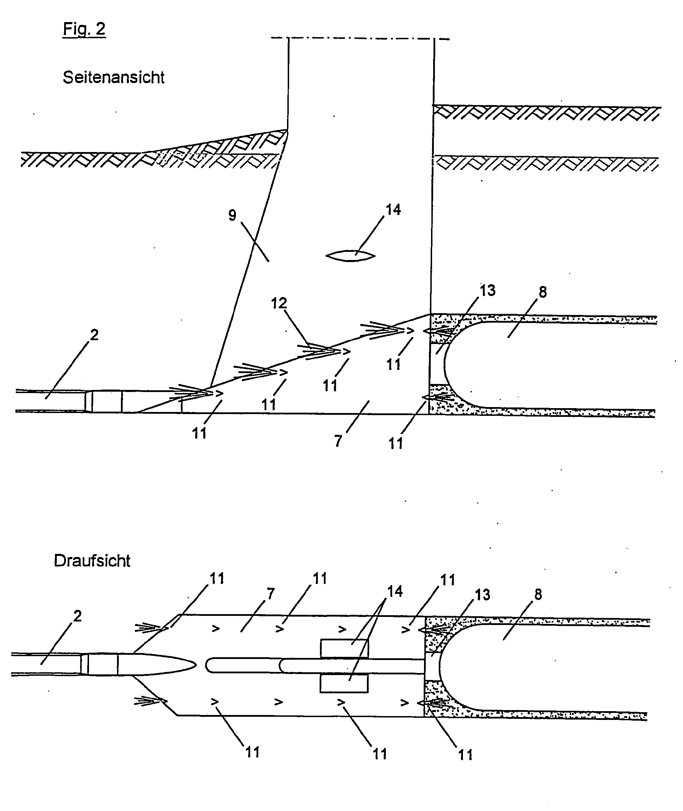

In Fig. 2 (Seitenansicht und Draufsicht) sind Details der erfindungsgemäßen Vorrichtung dargestellt. Das Zugmittel 2 wird z.B. über eine Schraubverbindung mit dem keilförmigen Ziehkopf 7 verbunden. Im keilförmigen Ziehkopf 7 befinden sich (nicht dargestellte) Zuleitungen zu den Düsen 11, aus denen die über das hohle Zugmittel 2 (z.B. Bohrgestänge) zugeführte Flüssigkeit 12 (z.B. eine Bentonit-Wasser-Suspension zur Reibungsminderung) austreten kann. Der keilförmige Ziehkopf 7 ist über eine Verbindungsvorrichtung 9 mit einem (nicht dargestellten) Fahrzeug 10 an der Geländeoberfläche verbunden. Dieses Fahrzeug 10 führt den keilförmigen Ziehkopf 7 und verhindert zum Beispie!, dass der keilförmige Ziehkopf 7 unzulässig tief abtaucht und damit von der vorgesehenen Verlegelinie 4 abweicht. Zusätzlich können an der Verbindungsvorrichtung 9 Steuerflächen 14 angebracht werden, mit denen ebenfalls die Tiefenlage des keilförmigen Ziehkopfs 7 gesteuert werden kann. Am hinteren Ende des keilförmigen Ziehkopfes 7 wird die Rohrleitung 8 über ein Gelenk 13 angekoppelt. Dieses zugfeste Gelenk kann als Kardangelenk und/oder Drehgelenk ausgelegt werden und verhindert während der Verlegung störende Kraft-und Drehmomenteinwirkungen von der Rohrleitung 8 auf den keilförmigen Ziehkopf 7.

## Patentansprüche

1. Verfahren zum Verlegen einer Rohrleitung im Boden, wobei ein zu einer Zugvorrichtung (1) führendes Zugmittel (2) von einem Startpunkt (3) entlang einer vorgegebenen Verlegelinie (4) mittels Pflugverfahren zu einem Zielpunkt (5) in den Boden (6) eingebracht wird, das Zugmittel (2) am Zielpunkt (5) an der Vorderseite mit einem keilförmigen Ziehkopf (7) verbunden wird, an der hinteren Seite des keilförmigen Ziehkopfes (7) die einzuziehende Rohrleitung (8) angebracht wird, der keilförmige Ziehkopf (7) sodann von der Zugvorrichtung (1) über das Zugmittel (2) vom Zielpunkt (5) entlang der vorgegebenen Verlegelinie (4) in den Boden (6) eingezogen wird, wobei der anstehende Boden (6) vom keilförmigen Ziehkopf (7) im Wesentlichen nach oben verdrängt wird, die Tiefen- und Seitenlage des keilförmigen Ziehkopfes (7) während des Verlegevorgangs über eine im Wesentlichen vertikale Verbindungsvorrichtung (9) von einem Fahrzeug (10) an der Geländeoberfläche kontrolliert und gesteuert wird und während des Verlegevorgangs eine über die Verbindungsvorrichtung (9) zugeleitete Flüssigkeit (12) aus an dem keilförmigen Ziehkopf (7) angebrachten Düsen (11) austritt.

2. Verfahren nach Anspruch 1, **dadurch gekennzeichnet, dass** das Zugmittel (2) über eine Pflugvorrichtung (18) in den Boden (6) eingebracht wird.

3. Verfahren nach Anspruch 1 oder 2, **dadurch gekennzeichnet, dass** die Flüssigkeit (12) von dem Fahrzeug (10) an der Geländeoberfläche zu den Düsen (11) geleitet wird.

4. Keilförmiger Ziehkopf zur Verwendung in einem Verfahren nach einem der Ansprüche 1 bis 3, **gekennzeichnet durch** ein zugfestes Gelenk (13), das dazu eingerichtet ist, den keilförmigen Ziehkopf (7) mit der Rohrleitung (8) zu verbinden.

5. Keilförmiger Ziehkopf nach Anspruch 4, **dadurch gekennzeichnet, dass** der keilförmige Ziehkopf (7) in Schwingungen versetzbar ist.

6. Verbindungsvorrichtung zur Verwendung in einem Verfahren nach einem der Ansprüche 1 bis 3, **dadurch gekennzeichnet, dass** die Verbindungsvorrichtung (9) in Schwingungen versetzbar ist.

7. Verbindungsvorrichtung nach Anspruch 6, **dadurch gekennzeichnet, dass** an der Verbindungsvorrichtung (9) Steuerflächen (14) angebracht sind.
